# EUROPÄISCHE PATENTANMELDUNG

(11) **EP 4 462 200 A1**
(43) Veröffentlichungstag der Anmeldung: **13.11.2024**
(21) Anmeldenummer: 23172324.8
(22) Anmeldetag: 09.05.2023
(51) Int. Cl.: G05B 19/042, G05B 23/02

(54) **ANLAGENBILDFRAGMENTE ZUR BEDIENUNG UND BEOBACHTUNG**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Verfahren, umfassend:
a) Erzeugen eines ersten Anlagenbildes (11) und eines zweiten Anlagenbildes (1) mittels eines Projektierungswerkzeuges (1, 18) eines Leitsystems (13), wobei das zweite Anlagenbild (1) eine Mehrzahl von Objekten (3, 4, 5, 6, 7) aufweist,
b) In dem Projektierungswerkzeug (1, 18), Festlegen eines Teils der Objekte (3, 4, 5, 6, 7) des zweiten Anlagenbildes (1) als ein Anlagenbildfragment (8, 9),
c) Übermitteln des ersten Anlagenbildes (11) und des zweiten Anlagenbildes (1) mit dem als Anlagenbildfragment (8, 9) festgelegten Teil der Objekte (3, 4, 5, 6, 7) des zweiten Anlagenbildes (1) an einen Operator Station Server (14) des Leitsystems (13),
d) Übertragen des ersten Anlagenbildes (11) mit einer grafischen Referenz auf den als Anlagenbildfragment (8, 9) festgelegten Teil der Objekte (3, 4, 5, 6, 7) des zweiten Anlagenbildes (1) an einen Operator Station Client (16) des Leitsystems (13) zur visuellen Darbietung an einen Operator des Leitsystems (13),
e) Für den Fall, dass der Operator die grafische Referenz des als Anlagenbildfragment (8, 9) festgelegten Teils der Objekte (3, 4, 5, 6, 7) des zweiten Anlagenbildes (1) anwählt, visuelle Darbietung des als Anlagenbildfragment (8, 9) festgelegten Teils der Objekte (3, 4, 5, 6, 7) des zweiten Anlagenbildes (1), ohne dass das zweite Anlagenbild (1) dem Operator visuell dargeboten wird.

## Beschreibung

Die Erfindung betrifft ein Verfahren zum Erzeugen eines ersten Anlagenbildes und eines zweiten Anlagenbildes. Außerdem betrifft die Erfindung ein Leitsystem mit einem Engineering Station Server, einem Operator Station Server und einem Operator Station Client, und eine technische Anlage. Zudem betrifft die Erfindung eine Verwendung eines Leitsystems zum Betrieb einer technischen Anlage.

Für die Bedienung und Beobachtung verfahrenstechnischer Anlagen werden symbolische Anlagenbilder erstellt, die die verfahrenstechnischen Zusammenhänge - insbesondere zwischen den Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten, Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständigen Quellen visualisieren zu können (z.B. Webcams, Anlagenbilder modularer Anlagenteile (Package Units) und Applikationen (z.B. Regleroptimierer, KPI-Berechnungen), usw.) zusammen.

Auch wenn ein Anlagenbild geöffnet ist, muss ein Operator stets andere Anlagenteile als die im geöffneten Anlagenbild dargestellten, beobachten, um gegebenenfalls eingreifen zu können, wenn von den Anlagenteilen entsprechende Alarme gemeldet werden - hierbei ist ein effizientes Alarmmanagement von zentraler Bedeutung.

Ziel eines effizienten Alarmmanagements verfahrenstechnischer Anlagen ist es, dass ein Operator möglichst schnell Alarme erkennen und zu deren Quelle navigieren kann. Da es in einer verfahrenstechnischen Anlage Tausende von Quellen von Alarmen geben kann, ist es üblich, Alarme über Gruppenbildung (Gruppenalarme = Summenalarme) sinnvoll zusammenzufassen und diese in überschaubaren Darstellungen anzubieten.

Das Navigieren zu einer Quelle ist im Stand der Technik durch einen so genannten Loop-In realisiert, mit dem üblicherweise ein Anlagenbildwechsel einhergeht. Auch wenn ein Operator den Fokus auf einen bestimmten Anlagenteil zu legen hat, muss er im Sinne des Alarmmanagements zur Evaluierung des Alarms nach dem Stand der Technik einen Anlagenbildwechsel vollziehen, durch den er den Fokus auf das eigentlich aktive Anlagenbild zwischenzeitlich verliert.

Selbst wenn keine Alarme vorliegen, ist der Operator oftmals gezwungen, routinemäßig andere Anlagenteile als diejenigen, auf die er sich gerade fokussiert hat, zu prüfen. Dies geht bislang mit kompletten Anlagenbildwechseln einher. Oftmals ist bei Überprüfungen, Alarm Loop-Ins usw. nicht das komplette Anlagenbild relevant, sondern lediglich Teile davon. Wird beispielsweise in einem Anlagenbild ein Regler optimiert, genügt oftmals zur Überprüfung ein Fragment eines anderen Anlagenbildes (z.B. eine Druckmessstelle), um die Auswirkungen beobachten zu können.

In der EP 4 092 502 A1 und der EP 3 623 891 A1 sind Leitsysteme offenbart, die einem Operator ein Bedienen und Beobachten einer technischen Anlage ermöglichen. Dabei ist eine Anzeige von Anlagenbildern teilweise von dem Operator individualisierbar ausgebildet.

Der Erfindung liegt daher die Aufgabe zugrunde, ein Verfahren und ein dazugehöriges Leitsystem für eine technische Anlage anzugeben, welche ein effizienteres Bedienen und Beobachten der technischen Anlage ermöglichen.

Diese Aufgabe wird gelöst durch ein Verfahren mit den Merkmalen des Anspruchs 1. Zudem wird die Aufgabe gelöst durch ein Leitsystem für eine technische Anlage, insbesondere Prozess- oder Fertigungsanlage, mit den Merkmalen des Anspruchs 8. Weiterhin wird die Aufgabe gelöst durch eine technische Anlage mit den Merkmalen des Anspruchs 13. Außerdem wird die Aufgabe gelöst durch eine Verwendung eines Leitsystems zum Betrieb einer technischen Anlage gemäß Anspruch 14. Vorteilhafte Weiterbildungen ergeben sich aus den abhängigen Ansprüchen.

Das erfindungsgemäße Verfahren umfasst die folgenden Verfahrensschritte:
a) Erzeugen eines ersten Anlagenbildes und eines zweiten Anlagenbildes mittels eines Projektierungswerkzeuges eines Leitsystems, wobei das zweite Anlagenbild eine Mehrzahl von Objekten aufweist,
b) Festlegen eines Teils der Objekte des zweiten Anlagenbildes als ein Anlagenbildfragment,
c) Übermitteln des ersten und des zweiten Anlagenbildes mit dem als Anlagenbildfragment festgelegten Teil der Objekte des zweiten Anlagenbildes an einen Operator Station Server,
d) Übertragen des ersten Anlagenbildes mit einer grafischen Referenz auf den als Anlagenbildfragment festgelegten Teil der Objekte des zweiten Anlagenbildes an einen Operator Station Client zur visuellen Darbietung an einen Operator des Leitsystems
e) Für den Fall, dass der Operator die grafische Referenz des als Anlagenbildfragment festgelegten Teils der Objekte des zweiten Anlagenbildes anwählt, visuelle Darbietung des als Anlagenbildfragment festgelegten Teils der Objekte des zweiten Anlagenbildes, ohne dass das zweite Anlagenbild dem Operator visuell dargeboten wird.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive des Leitsystems für eine technische Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Im Rahmen des erfindungsgemäßen Verfahrens werden zunächst ein erstes und ein zweites Anlagenbild erzeugt. Hierfür wird ein spezielles Projektierungswerkzeug des Leitsystems verwendet, welches auf einem Engineering Station Server implementiert sein kann. Ein Anlagenbild stellt dabei die funktionellen Zusammenhänge zwischen einzelnen Objekten einer mittels des Leitsystems bedient und beobachteten technischen Anlage dar. Bei den Objekten kann es sich beispielsweise um Rohrleitungen, Tanks, Motoren, Ventile, Aktoren, Sensoren, Brenner oder Roboter handeln. Das Anlagenbild umfasst in der Regel statische und dynamisch änderbare Symbole sowie Container, in denen beispielsweise Kamerabilder aus eigenständigen und unabhängigen Quellen dargestellt werden können.

Dabei wird davon ausgegangen, dass wenigstens das zweite Anlagenbild eine Mehrzahl von Objekten aufweist. Es wird demnach nicht von einem zweiten Anlagenbild ausgegangen, dass trivialerweise nur ein einziges Objekt wie einen Heizkessel umfasst.

Es wird nun ein Teil der Mehrzahl der Objekte des zweiten Anlagenbildes als ein Anlagenbildfragment festgelegt. Hierzu kann der Teil der Objekte in dem Projektierungswerkzeug selektiert und als das Anlagenbildfragment definiert werden. Dem Anlagenbildfragment kann dabei eine Bezeichnung zugewiesen werden, welche nicht mit den Bezeichnungen der einzelnen Objekte in Verbindung stehen muss, sondern frei gewählt werden kann.

Beide Anlagenbilder sowie das zuvor definierte Anlagenbildfragment werden von dem Projektierungswerkzeug an den Operator Station Server übertragen. Der Operator Station Server überträgt daraufhin das erste Anlagenbild an den Operator Station Client, welcher das erste Anlagenbild einem Operator grafisch darbietet. Dabei übermittelt der Operator Station Server dem Operator Station Client zusätzlich eine grafische Referenz auf den als Anlagenbildfragment festgelegten Teil der Mehrzahl von Objekten des zweiten Anlagenbildes. Mit anderen Worten erhält der Operator einen grafischen Hinweis, beispielsweise in Form eines Symbols, einer Bezeichnung oder dergleichen, auf das Anlagenbildfragment. Dabei kann die Referenz die Bezeichnung des Anlagenbildfragmentes und/oder einen Hinweis darauf, dass es sich um ein Anlagenbildfragment handelt, umfassen. Die grafische Referenz kann also mit einem grafischen Hinweis, insbesondere einem Symbol, versehen sein, welcher dazu ausgebildet und vorgesehen ist, den Operator auf das Vorliegen wenigstens eines Anlagenbildfragmentes aufmerksam zu machen.

Wenn der Operator die grafische Referenz anwählt, wird ihm das Anlagenbildfragment zusätzlich zu dem ersten Anlagenbild visuell dargeboten. Dabei ist wesentlich, dass das Anlagenbildfragment dargeboten wird, ohne dass hierfür das vollständige zweite Anlagenbild dargeboten werden müsste. Die visuelle Darbietung des Anlagenbildfragmentes kann vorteilhafterweise derart erfolgen, dass die visuell dargebotenen Objekte des ersten Anlagenbildes nicht überdeckt werden.

Das erfindungsgemäße Verfahren ermöglicht dem Operator eine einfache und schnelle Fokussierung auf das Anlagenbildfragment, ohne dass das eigentliche Anlagenbild gewechselt werden müsste. Der Operator kann somit mehrere kritische Anlagenteile parallel beobachten, ohne hierbei den Fokus auf seine primäre Bedienung und Beobachtung zu verlieren.

Der Teil der Objekte des zweiten Anlagenbildes, der als das Anlagenbildfragment festgelegt wird, kann eine Mehrzahl von Objekten umfassen. Es kann mit anderen Worten eine Gruppe von einzelnen Objekten zu einem Anlagenbildfragment zusammengefasst werden. Dies kann vorteilhaft sein, wenn mehrere Objekte zusammengehören und nicht sinnvoll einzeln bedient und beobachtet werden können.

Die Erfindung ist nicht auf das Festlegen eines einzigen Anlagenbildfragmentes beschränkt. Vielmehr kann eine Mehrzahl von Anlagenbildfragmenten innerhalb des zweiten Anlagenbildes festgelegt werden. Diese Mehrzahl von Anlagenbildfragmenten kann dann auch parallel durch den Operator geöffnet werden, um eine Zusammenschau der einzelnen Anlagenbildfragmente zu ermöglichen. Der Operator Station Server und der Operator Station Client bewirken dabei eine durch den Operator individualisierbare grafische Zusammenschau der Anlagenbildfragmente für den Operator. Der Operator kann hierbei beispielsweise festlegen, an welcher Stelle und mit welcher Größe die Anlagenbildfragmente visuell dargestellt werden sollen. Neben dem regulären (ersten) Anlagenbild kann eine Bedienung und Beobachtung durch den Operator prinzipiell auch über die Anlagenbildfragmente erfolgen. Der Operator kann sich bei einem Mehr-Monitor Betrieb, oder auch bei Anlagenbildgruppen zur Laufzeit effizient Übersichtsbilder zusammenstellen, die die wichtigsten Aspekte (zuvor als Anlagenbildfragmente definiert) von verschiedenen Anlagenbildern umfassen.

Die Anlagenbildfragmente können, müssen sich aber nicht auf Objekte eines einzigen Anlagenbildes (des zweiten) beziehen. Vielmehr können wenigstens ein Anlagenbildfragment einem oder mehreren Objekten innerhalb des zweiten Anlagenbildes, und wenigstens ein Anlagenbildfragment einem oder mehreren Objekten innerhalb eines dritten Anlagenbildes zugeordnet werden.

Im Rahmen einer bevorzugten Weiterbildung der Erfindung bieten der Operator Station Server und der Operator Station Client dem Operator visuell dar, ob dem als Anlagenbildfragment festgelegten Teil der Objekte des zweiten Anlagenbildes einer oder mehrere aktive Meldungen, insbesondere Alarmmeldungen, zugeordnet sind. Dabei kann die Referenz auf das Anlagenbildfragment mit einem Alarmstatus versehen werden, der beispielsweise über eine entsprechende Farbgebung dem Operator intuitiv anzeigt, ob dem Teil der Objekte des zweiten Anlagenbildes ein aktiver Alarm zugeordnet ist, welcher Teil als Anlagenbildfragment definiert wurde. Dadurch kann der Operator bereits unmittelbar erkennen, ob die Alarmgebung aus dem Anlagenbildfragment stammt, bevor er dieses Anlagenbildfragment öffnet. Zudem kann ihn die Alarmgebung des Anlagenbildfragmentes gezielt darauf hinweisen, dass er das Anlagenbildfragment öffnen sollte, um die hierin befindlichen Objekte zu beobachten.

Die zuvor formulierte Aufgabe wird zudem gelöst durch ein Leitsystem für eine technische Anlage, insbesondere Prozess- oder Fertigungsanlage, welches einen Engineering Station Server, einen Operator Station Server und einen Operator Station Client aufweist, wobei der Engineering Station Server dazu ausgebildet ist, ein erstes Anlagenbildes und ein zweites Anlagenbild mittels eines auf dem Engineering Station Server computerimplementierten Projektierungswerkzeuges zu erzeugen, wobei das zweite Anlagenbild eine Mehrzahl von Objekten aufweist, und wobei der Engineering Station Server ferner dazu ausgebildet ist, einen Teil der Objekte des zweiten Anlagenbildes als ein Anlagenbildfragment festzulegen, und wobei der Engineering Station Server weiter dazu ausgebildet ist, das erste und das zweite Anlagenbild mit dem als Anlagenbildfragment festgelegten Teil der Objekte des zweiten Anlagenbildes an den Operator Station Server zu übermitteln, und wobei der Operator Station Server dazu ausgebildet ist, das erste Anlagenbild mit einer grafischen Referenz auf den als Anlagenbildfragment festgelegten Teil der Objekte des zweiten Anlagenbildes an einen Operator Station Client zur visuellen Darbietung an einen Operator des Leitsystems zu übertragen, und wobei der Operator Station Client dazu ausgebildet ist, für den Fall, dass der Operator die grafische Referenz des als Anlagenbildfragment festgelegten Teils der Objekte des zweiten Anlagenbildes anwählt, eine visuelle Darbietung des als Anlagenbildfragment festgelegten Teils der Objekte des zweiten Anlagenbildes zu bewirken, ohne dass das zweite Anlagenbild dem Operator visuell dargeboten wird.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Der Engineering Station Server kann dazu ausgebildet sein, eine Mehrzahl von Anlagenbildfragmenten innerhalb des zweiten Anlagenbildes festzulegen. Er kann alternativ oder zusätzlich dazu ausgebildet sein, eine Mehrzahl von Anlagenbildfragmenten festzulegen, von denen wenigstens eines innerhalb des zweiten Anlagenbildes und wenigstens eines innerhalb eines dritten Anlagenbildes festgelegt wird.

Der Operator Station Server und der Operator Station Client können dazu ausgebildet sein, eine durch den Operator individualisierbare grafische Zusammenschau der Anlagenbildfragmente für den Operator zu bewirken. Sie können auch dazu ausgebildet sein, dem Operator visuell darzubieten, ob dem als Anlagenbildfragment festgelegten Teil der Objekte des zweiten Anlagenbildes einer oder mehrere aktive Meldungen, insbesondere Alarmmeldungen, zugeordnet sind.

Die zuvor formulierte Aufgabe wird zudem gelöst durch eine technische Anlage, insbesondere Fertigungs- oder Prozessanlage, die ein Leitsystem wie zuvor erläutert und wenigstens eine Anlagenkomponente aufweist, die durch das Leitsystem bedien- und beobachtbar ist.

Die zuvor formulierte Aufgabe wird zudem gelöst durch die Verwendung eines Leitsystems wie zuvor erläutert zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Oberfläche eines Projektierungswerkzeuges;
- FIG 2: eine grafische Oberfläche eines Operator Station Clients gemäß einem ersten Aspekt;
- FIG 3: die grafische Oberfläche des Operator Station Clients gemäß einem zweiten Aspekt;
- FIG 4: die grafische Oberfläche des Operator Station Clients gemäß einem dritten Aspekt; und
- FIG 5: ein Leitsystem in einer schematischen Darstellung.

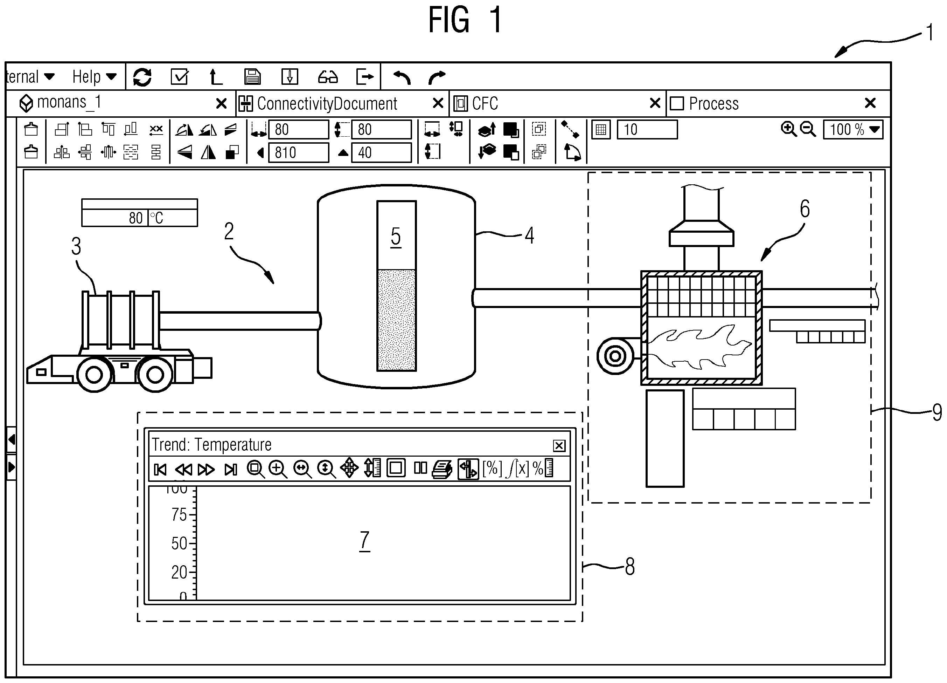

In FIG 1 ist eine grafische Oberfläche 1 eines Projektierungswerkzeuges eines Leitsystems dargestellt. Das Projektierungswerkzeug kann beispielweise auf einem Engineering Station Server (hier nicht dargestellt) des Leitsystems computerimplementiert sein. In der grafischen Oberfläche 1 ist ein Anlagenbild 2 dargestellt. Das Anlagenbild 2 umfasst grafische Symbolobjekte wie einen Tankwagen 3, einen Tank 4 mit Füllstandsanzeige 5 und einen Verbrenner 6, sowie eine Anzeige 7 zur Darstellung eines (zeitlichen) Verlaufs eines Messwertes.

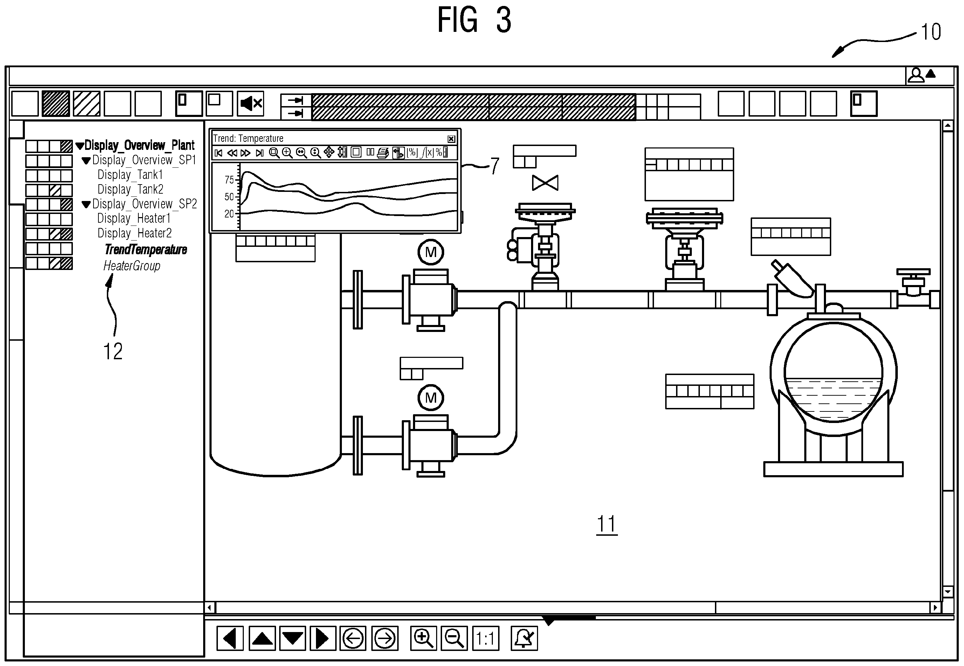

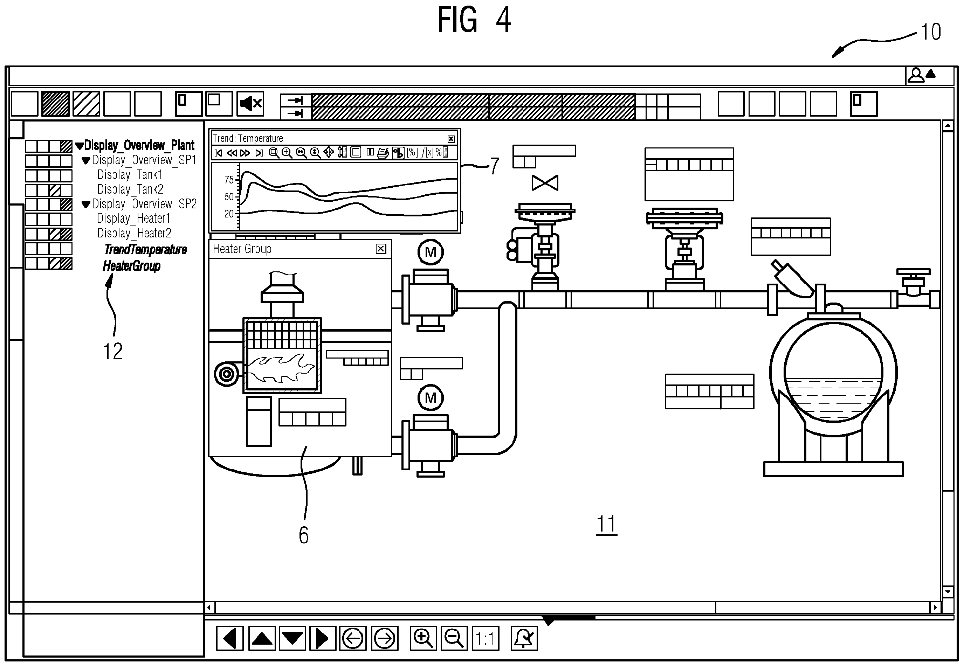

In FIG 1 ist das erzeugte zweite Anlagenbild 2 dargestellt. Es wird angenommen, dass noch ein erstes Anlagenbild (nicht dargestellt) mit dem Projektierungswerkzeug erstellt worden ist. In dem dargestellten zweiten Anlagenbild 2 wird ein erster Teil der Objekte, nämlich die Anzeige 7 zur Darstellung des Verlaufs des Messwertes, als ein erstes Anlagenbildfragment 8 festgelegt. Diese Festlegung ist in FIG 1 durch eine gestrichelte Umrandung verdeutlicht. Es handelt sich dabei um ein einziges Objekt des zweiten Anlagenbildes 2, das als das erste Anlagenbildfragment 8 festgelegt wurde. Zusätzlich wurde die Bezeichnung "Trend:Temperature" für das erste Anlagenbildfragment 8 vergeben (vgl. FIG 3 und FIG 4).

Der Verbrenner 6 sowie dazugehörige Anzeigen und Komponenten wurden als ein zweites Anlagenbildfragment 9 festgelegt. Es handelt sich dabei um mehrere Objekte bzw. eine Gruppe von Objekten des zweiten Anlagenbildes 2, die als das zweite Anlagenbildfragment 9 festgelegt wurden. Zusätzlich wurde die Bezeichnung "HeaterGroup" für das zweite Anlagenbildfragment 9 vergeben (vgl. FIG 3 und FIG 4). Das zweite Anlagenbildfragment 9 muss nicht zwingend Objekten des zweiten Anlagenbildes 2 zugeordnet werden. Vielmehr hätte die Zuordnung auch zu einem oder mehreren Objekten eines dritten, ebenfalls in FIG 1 nicht dargestellten Anlagenbildes erfolgen können.

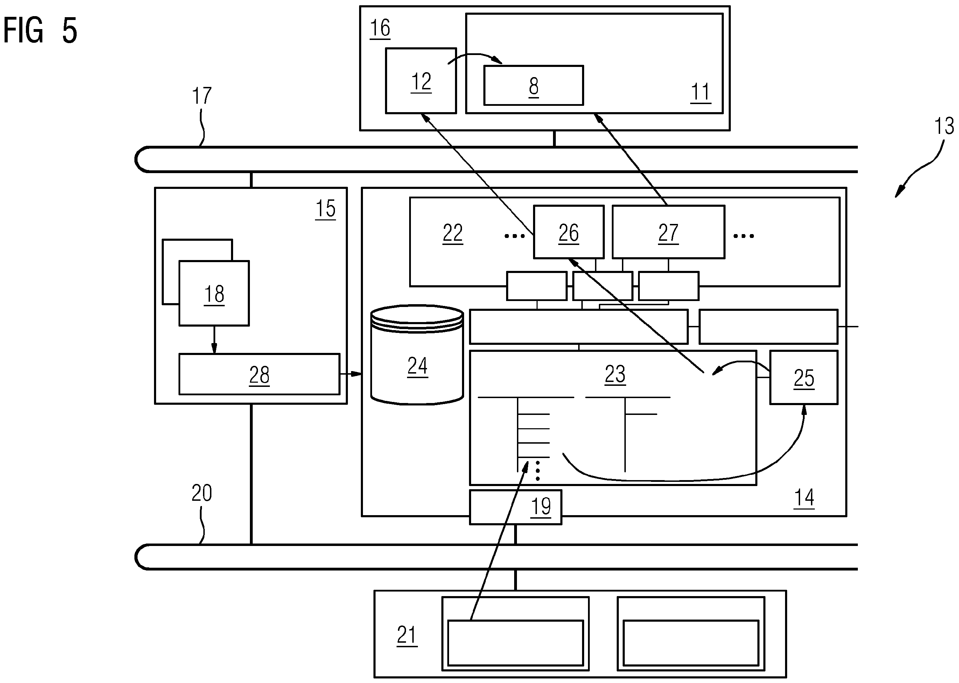

Das Projektierungswerkzeug 1 bzw. die Infrastruktur, auf der das Projektierungswerkzeug 1 implementiert ist (bspw. der Engineering Station Server) überträgt die erzeugten ersten und zweiten Anlagenbilder (und ggf. weitere Anlagenbilder) an einen Operator Station Server des Leitsystems (vgl. FIG 5). Der Operator Station Server überträgt das erste Anlagenbild mit einer grafischen Referenz auf den als Anlagenbildfragment festgelegten Teil der Objekte des zweiten Anlagenbildes 2 an einen Operator Station Client des Leitsystems zur visuellen Darbietung an einen Operator des Leitsystems (vgl. FIG 5).

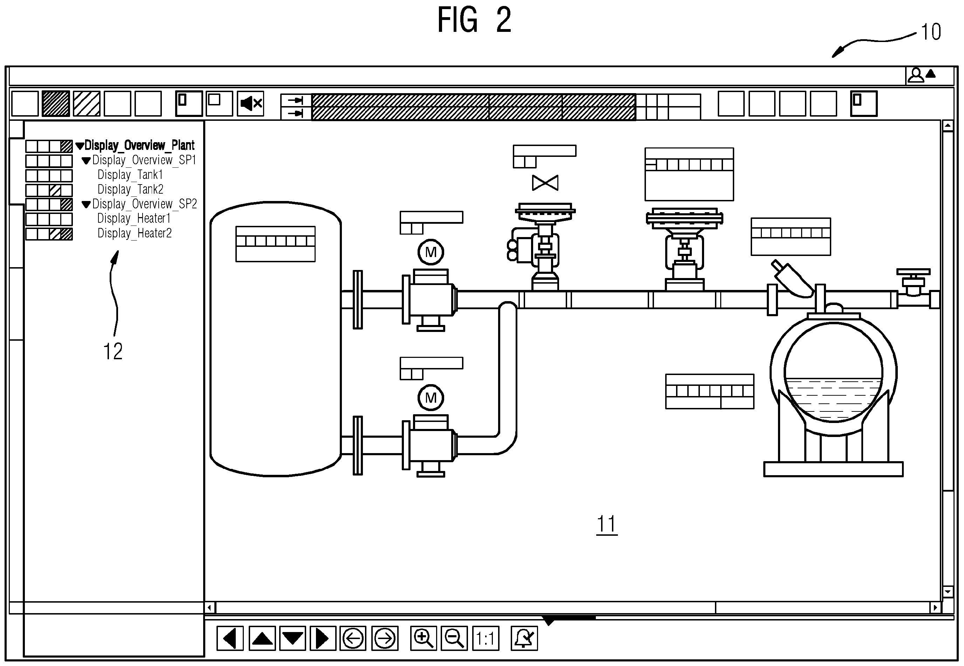

In FIG 2 ist eine visuelle Darbietung 10 des Operator Station Clients an den Operator dargestellt. Den größten Teil der Darbietung 10 stellt das erste Anlagenbild 11 dar, welches eine Vielzahl von Symbolobjekten umfasst, die einen Teil einer Prozessanlage repräsentieren. Auf der linken Seite in FIG 2 ist eine Hierarchie 12 dargestellt, über welche der Operator zu verschiedenen Anlagenbildern 2, 11 navigieren kann. In der Hierarchie 12 kann der Operator beispielsweise das zweite Anlagenbild 2 anwählen, welches mit "Display_Heater2" bezeichnet ist. Ein rotes Plus-Symbol neben dem Namen "Display_Heater" zeigt dem Operator dabei an, dass dem zweiten Anlagenbild 2 eines oder mehrere Anlagenbildfragmente 8, 9 zugeordnet sind. Möchte der Operator den Fokus auf das geöffnete erste Anlagenbild 11 nicht verlieren und lediglich die Details aus den Anlagenbildfragmenten 8, 9 nutzen, kann er durch eine Anwahl des Plus-Symbols die Anlagenbildfragmente 8, 9 in der Hierarchie 12 einblenden, was in FIG 3 verdeutlicht wird.

In FIG 3 ist zu erkennen, dass sich das rote Plus-Symbol zu einem roten Minus-Symbol gewandelt hat, nachdem der Operator das rote Plus-Symbol angewählt hat. Unterhalb der Bezeichnung des zweiten Anlagenbildes 2 "Display_Heater2" sind die Bezeichnungen "Trend:Temperature" des ersten Anlagenbildfragmentes 8 und "HeaterGroup" des zweiten Anlagenbildfragmentes 9 zu erkennen. Weiterhin ist zu erkennen, dass links neben den Bezeichnungen für die Anlagenbildfragmente 8, 9 eine Statusanzeige (in Form von Quadraten) angeordnet ist, welche über eine an sich übliche Farbgebung (gelb, rot) das Vorliegen einer Alarmmeldung oder einer Warnmeldung anzeigt.

Beispielhaft hat der Operator in FIG 3 zunächst das erste Anlagenbildfragment 8 ausgewählt. Daraufhin wird innerhalb des ersten Anlagenbildes an einer geeigneten Stelle die Anzeige 7 zur Darstellung des Verlaufs des Messwertes angezeigt, ohne dass dabei das zweite Anlagenbild 2 als Ganzes geöffnet werden müsste. In FIG 4 hat der Operator zusätzlich das zweite Anlagenbildfragment 9 angewählt, weshalb der Verbrenner 6 mit den dazugehörigen Objekten in dem ersten Anlagenbild 11 dargestellt wird. Sowohl die Anzeige 7 als auch der Verbrenner 6 mit den dazugehörigen Objekten sind als von dem Operator verschiebbare Fenster ausgebildet, die von dem Operator individuell angeordnet werden können.

In FIG 5 ist das Leitsystem 13 für die Bedienung und Beobachtung einer als Prozessanlage ausgebildeten technischen Anlage schematisch dargestellt. Das Leitsystem 13 umfasst einen Operator Station Server 14, einen Engineering Station Server 15 und einen Operator Station Client 16. Der Operator Station Server 14, der Engineering Station Server 15 und der Operator Station Client 16 sind über einen Terminalbus 17 miteinander und optional mit nicht dargestellten weiteren Komponenten des Leitsystems 13 wie einem Archivserver verbunden.

Ein Benutzer bzw. Operator kann zum Zwecke des Bedienens und Beobachtens über den Operator Station Client 16 mittels des Terminalbus 17 auf den Operator Station Server 14 zugreifen. Analog dazu kann ein Projekteur im Rahmen einer Projektierung der Automatisierung für die technische Anlage auf den Engineering Station Server 15 und ein hierauf computerimplementiertes Projektierungswerkzeug 18 zugreifen. Der Terminalbus 17 kann, ohne sich darauf zu beschränken, beispielsweise als Industrial Ethernet ausgebildet sein.

Der Operator Station Server 14 weist eine Geräteschnittstelle 19 auf, die mit einem Anlagenbus 20 verbunden ist. Über diese Geräteschnittstelle 19 ist der Operator Station Server 14 mit einem Automatisierungsgerät 21 sowie mit weiteren Komponenten der verfahrenstechnischen Anlage wie Peripheriegeräten verbunden und kann mit diesen kommunizieren. Der Anlagenbus 20 kann, ohne sich darauf zu beschränken, beispielsweise als Industrial Ethernet ausgebildet sein.

Auf dem Operator Station Server 14 sind weiterhin ein Visualisierungsdienst 22, ein Prozessabbild 23, ein Konfigurationsspeicher 24 und ein Alarmdienst 25 implementiert. Der in dem Operator Station Server 14 integrierte Visualisierungsdienst 22 initiiert eine Übertragung von Visualisierungsinformationen an den Operator Station Client 16. Der Operator Station Client 16 ist dazu ausgebildet, eine Visualisierung, d.h. eine grafische Darbietung, insbesondere von Anlagenbildern, zum Bedienen und Beobachten der Prozessanlage darzustellen. Ein Teildienst des Visualisierungsdienstes 22 ist ein Hierarchiedienst 26, welcher die in Figuren 2 bis 4 gezeigte Hierarchie 12 erzeugt und an den Operator Station Client 16 übermittelt. Ein weiterer Teildienst des Visualisierungsdienstes 22 stellt ein Anlagenbilddienst 27 dar, welcher die Anlagenbilder 2, 11 zur visuellen Darstellung an den Operator Station Client 16 übermittelt.

In dem Prozessabbild 23 ist jeweils eine Momentaufnahme der (Signal-)Zustände der verbundenen Geräte und/oder Applikationen hinterlegt. Vorschriften zum strukturellen Aufbau des Prozessabbildes 23 entnimmt der Operator Station Server 14 dem Konfigurationsspeicher 24. Der Alarmdienst 25 des Leitsystems 13 greift auf das Prozessabbild 23 zu und entnimmt diesem etwaige Alarmmeldungen. Diese werden wiederum an den Operator Station Client 16 übertragen, um dem Operator die Alarmmeldungen visuell (und ggf. akustisch) in Form einer Alarmanzeige (vgl. FIG 3 oder FIG 4) oder einem darzubieten.

In einer Projektierungsphase kann ein Projekteur durch Nutzung des Projektierungswerkzeuges 18 (in FIG 1 mit dem Bezugszeichen 1 bezeichnet) das erste Anlagenbild 2 und das zweite Anlagenbild 11 erzeugen. Dabei legt er wenigstens ein Anlagenbildfragment 8, 9 fest. Die erstellte Projektierung wird über eine an sich bekannte Ladefunktionalität 28 in den Konfigurationsspeicher 24 des Operator Station Servers 14 übertragen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren, umfassend:
a) Erzeugen eines ersten Anlagenbildes (11) und eines zweiten Anlagenbildes (1) mittels eines Projektierungswerkzeuges (1, 18) eines Leitsystems (13), wobei das zweite Anlagenbild (1) eine Mehrzahl von Objekten (3, 4, 5, 6, 7) aufweist,
b) In dem Projektierungswerkzeug (1, 18), Festlegen eines Teils der Objekte (3, 4, 5, 6, 7) des zweiten Anlagenbildes (1) als ein Anlagenbildfragment (8, 9),
c) Übermitteln des ersten Anlagenbildes (11) und des zweiten Anlagenbildes (1) mit dem als Anlagenbildfragment (8, 9) festgelegten Teil der Objekte (3, 4, 5, 6, 7) des zweiten Anlagenbildes (1) an einen Operator Station Server (14) des Leitsystems (13),
d) Übertragen des ersten Anlagenbildes (11) mit einer grafischen Referenz auf den als Anlagenbildfragment (8, 9) festgelegten Teil der Objekte (3, 4, 5, 6, 7) des zweiten Anlagenbildes (1) an einen Operator Station Client (16) des Leitsystems (13) zur visuellen Darbietung an einen Operator des Leitsystems (13),
e) Für den Fall, dass der Operator die grafische Referenz des als Anlagenbildfragment (8, 9) festgelegten Teils der Objekte (3, 4, 5, 6, 7) des zweiten Anlagenbildes (1) anwählt, visuelle Darbietung des als Anlagenbildfragment (8, 9) festgelegten Teils der Objekte (3, 4, 5, 6, 7) des zweiten Anlagenbildes (1), ohne dass das zweite Anlagenbild (1) dem Operator visuell dargeboten wird.

2. Verfahren nach Anspruch 1, bei dem der Teil der Objekte (3, 4, 5, 6, 7) des zweiten Anlagenbildes (1), der als das Anlagenbildfragment (8, 9) festgelegt wird, eine Mehrzahl von Objekten (3, 4, 5, 6, 7) umfasst.

3. Verfahren nach Anspruch 1 oder 2, bei dem eine Mehrzahl von Anlagenbildfragmenten (8, 9) innerhalb des zweiten Anlagenbildes (1) festgelegt wird.

4. Verfahren nach einem der vorangegangenen Ansprüche, bei dem eine Mehrzahl von Anlagenbildfragmenten (8, 9) festgelegt wird, von denen wenigstens eines innerhalb des zweiten Anlagenbildes (1) und wenigstens eines innerhalb eines dritten Anlagenbildes festgelegt wird.

5. Verfahren nach Anspruch 3 oder 4, bei dem der Operator Station Server (14) und der Operator Station Client (16) eine durch den Operator individualisierbare grafische Zusammenschau der Anlagenbildfragmente (8, 9) für den Operator bewirken.

6. Verfahren nach einem der vorangegangenen Ansprüche, bei dem die grafische Referenz mit einem grafischen Hinweis, insbesondere einem Symbol, versehen ist, welcher dazu ausgebildet und vorgesehen ist, den Operator auf das Vorliegen wenigstens eines Anlagenbildfragmentes (8, 9) aufmerksam zu machen.

7. Verfahren nach einem der vorangegangenen Ansprüche, bei dem der Operator Station Server (14) und der Operator Station Client (16) dem Operator visuell darbieten, ob dem als Anlagenbildfragment (8, 9) festgelegten Teil der Objekte (3, 4, 5, 6, 7) des zweiten Anlagenbildes (1) einer oder mehrere aktive Meldungen, insbesondere Alarmmeldungen, zugeordnet sind.

8. Leitsystem (13) für eine technische Anlage, insbesondere Prozess- oder Fertigungsanlage, welches einen Engineering Station Server (15), einen Operator Station Server (14) und einen Operator Station Client (16) aufweist,
wobei der Engineering Station Server (15) dazu ausgebildet ist, ein erstes Anlagenbild (11) und ein zweites Anlagenbild (1) mittels eines auf dem Engineering Station Server (15) computerimplementierten Projektierungswerkzeuges (1, 18) zu erzeugen, wobei das zweite Anlagenbild (1) eine Mehrzahl von Objekten (3, 4, 5, 6, 7) aufweist,
und wobei der Engineering Station Server (15) ferner dazu ausgebildet ist, einen Teil der Objekte (3, 4, 5, 6, 7) des zweiten Anlagenbildes (1) als ein Anlagenbildfragment (8, 9) festzulegen,
und wobei der Engineering Station Server (15) weiter dazu ausgebildet ist, das erste Anlagenbild (11) und das zweite Anlagenbild (1) mit dem als Anlagenbildfragment (8, 9) festgelegten Teil der Objekte (3, 4, 5, 6, 7) des zweiten Anlagenbildes (1) an den Operator Station Server (14) zu übermitteln,
und wobei der Operator Station Server (14) dazu ausgebildet ist, das erste Anlagenbild (11) mit einer grafischen Referenz auf den als Anlagenbildfragment (8, 9) festgelegten Teil der Objekte (3, 4, 5, 6, 7) des zweiten Anlagenbildes (1) an den Operator Station Client (16) zur visuellen Darbietung an einen Operator des Leitsystems (13) zu übertragen,
und wobei der Operator Station Client (16) dazu ausgebildet ist, für den Fall, dass der Operator die grafische Referenz des als Anlagenbildfragment (8, 9) festgelegten Teils der Objekte (3, 4, 5, 6, 7) des zweiten Anlagenbildes (1) anwählt, eine visuelle Darbietung des als Anlagenbildfragment (8, 9) festgelegten Teils der Objekte (3, 4, 5, 6, 7) des zweiten Anlagenbildes (1) zu bewirken, ohne dass das zweite Anlagenbild (1) dem Operator visuell dargeboten wird.

9. Leitsystem (13) nach Anspruch 8, bei dem der Engineering Station Server (15) dazu ausgebildet ist, eine Mehrzahl von Anlagenbildfragmenten (8, 9) innerhalb des zweiten Anlagenbildes (1) festzulegen.

10. Leitsystem (13) nach Anspruch 8 oder 9, bei dem der Engineering Station Server (15) dazu ausgebildet ist, eine Mehrzahl von Anlagenbildfragmenten (8, 9) festzulegen, von denen wenigstens eines innerhalb des zweiten Anlagenbildes (1) und wenigstens eines innerhalb eines dritten Anlagenbildes festgelegt wird.

11. Leitsystem (13) nach einem der Ansprüche 8 bis 10, bei dem der Operator Station Server (14) und der Operator Station Client (16) dazu ausgebildet sind, eine durch den Operator individualisierbare grafische Zusammenschau der Anlagenbildfragmente (8, 9) für den Operator zu bewirken.

12. Leitsystem (13) nach einem der Ansprüche 8 bis 11, bei dem der Operator Station Server (14) und der Operator Station Client (16) dazu ausgebildet sind, dem Operator visuell darzubieten, ob dem als Anlagenbildfragment (8, 9) festgelegten Teil der Objekte (3, 4, 5, 6, 7) des zweiten Anlagenbildes (1) einer oder mehrere aktive Meldungen, insbesondere Alarmmeldungen, zugeordnet sind.

13. Technische Anlage, insbesondere Fertigungs- oder Prozessanlage, umfassend ein Leitsystem (13) nach einem der Ansprüche 8 bis 12 und wenigstens eine Anlagenkomponente, die durch das Leitsystem (13) bedien- und beobachtbar ist.

14. Verwendung eines Leitsystems (13) gemäß einem der Ansprüche 8 bis 12 zum Betrieb einer technischen Anlage gemäß Anspruch 13.
